Europäisches Patentamt

European Patent Office

Office européen des brevets

(11) Publication number: **0 127 314**

**A2**

## (12) EUROPEAN PATENT APPLICATION

(21) Application number: **84302775.6**

(22) Date of filing: **25.04.84**

(51) Int. Cl.³: **F 16 D 55/224**

(30) Priority: **27.05.83 US 498900**

(43) Date of publication of application:
**05.12.84 Bulletin 84/49**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Mitchell, Clarence Ivan**
**2645 Coldsprings Drive**
**Zenia Ohio 45385(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) **Vehicle disc brake assembly.**

(57) A pressure-actuated disc brake for a vehicle has a mechanical arrangement for actuating the disc brake for parking. The mechanical arrangement has a coil spring clutch mechanism (80), or a sprag clutch mechanism (180), acting on a sleeve nut (72; 172), which is threaded on a piston shaft (66). A drive arrangement (86; 187) is actuable to cause the clutch mechanism to grip the sleeve nut and rotate the nut to move the shaft and piston to mechanically actuate the brake.

*Fig.1*

EP 0 127 314 A2

## VEHICLE DISC BRAKE ASSEMBLY

This invention relates to a vehicle disc brake assembly as specified in the preamble of claim 1, for example as disclosed in US-A-3,770,082.

The present invention is concerned with a simplified arrangement in which a cylindrical sleeve nut is acted on by a clutch mechanism to actuate and deactuate the clutch for actuation and deactuation of a mechanically acting parking brake, as well as to adjust the brake as the brake is actuated.

To this end, a vehicle disc brake assembly in accordance with the present invention is characterised by the features specified in the characterising portion of claim 1.

A preferred embodiment of a vehicle disc brake assembly in accordance with the present invention uses a clutch mechanism acting on a sleeve nut, which is threaded on a shaft secured to or forming a part of the actuating piston. A mechanically rotated shaft and drive member assembly is connected to actuate and deactuate the clutch to transmit the parking brake force through the clutch to the sleeve nut and cause the threaded shaft to move the piston in the brake-engaging direction. Rotation of the shaft and drive member assembly in the other direction releases the clutch and permits retraction of the piston and threaded shaft.

In the drawings:

Figure 1 is a fragmentary elevational view of a first embodiment of a vehicle disc brake assembly in accordance with the present invention, with parts broken away and in section; and

Figure 2 is a view similar to Figure 1, but showing a second embodiment of a vehicle disc brake assembly in accordance with the present invention.

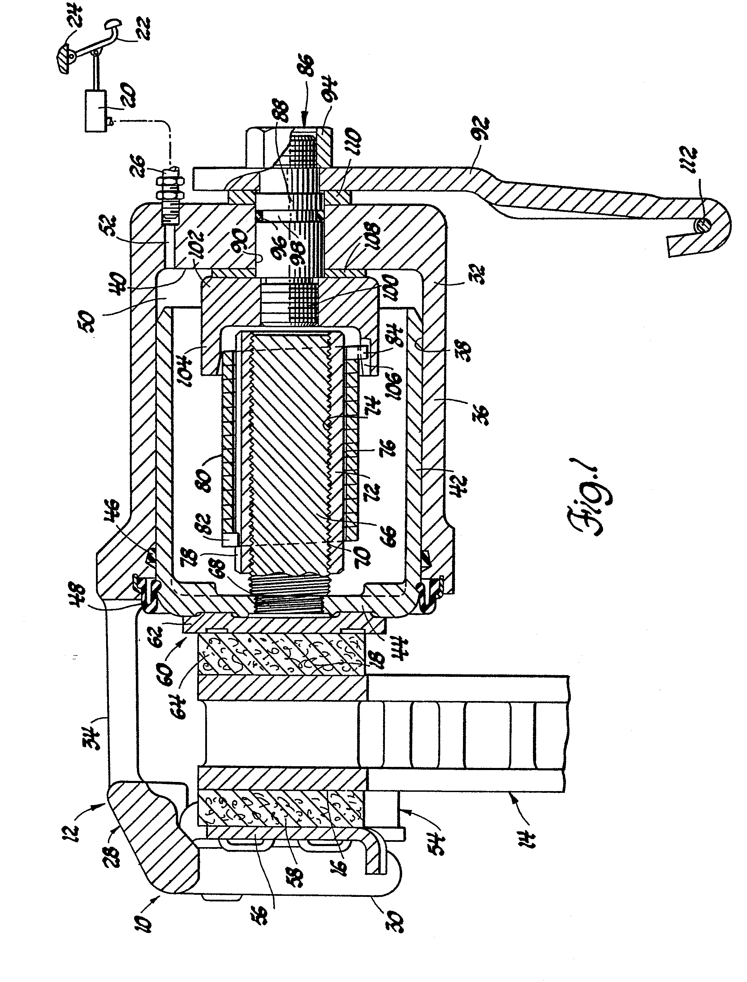

With reference now to Figure 1 of the drawings, a vehicle brake assembly 10 includes a caliper assembly 12 and a rotatable disc 14 operatively secured to a vehicle wheel (not shown). The disc 14 has opposed friction-braking surfaces 16 and 18. The caliper assembly is mounted on a mounting bracket (not shown) so that it is slidably movable during brake engagement and release. The vehicle brake system is schematically illustrated as also including a master cylinder 20 actuable by a brake pedal 22 pivotally mounted on a vehicle portion 24. The master cylinder is connected to the caliper assembly by a conduit 26.

The caliper assembly 12 includes a caliper body 28 formed to provide an outboard caliper leg 30, an inboard caliper leg 32 and a bridge section 34 joining the two caliper legs and extending over the outer of the two caliper legs and also extending over the outer periphery of the disc 14. The inboard caliper leg 32 is formed to define a cylinder 36 having a cylinder side wall 38 and a cylinder end wall 40. The open end of the cylinder opens towards the outboard caliper leg 30. A cup-shaped piston 42 is slidably mounted in the cylinder 36 with the piston head 44 extending through the open end of the cylinder towards the friction-braking surface 18 of the disc 14. A seal 46 and a boot 48 are provided to seal the piston and cylinder and to prevent the entry of dust or other contaminants into the cylinder. The piston and the cylinder walls define a pressure chamber 50 to which the conduit 26 is connected by a pressure inlet 52. Thus, in the hydraulic brake system illustrated, hydraulic fluid under pressure from the master cylinder 20 is introduced into the chamber 50 to actuate the brake.

If the brake were an air-actuated brake, an air pressure arrangement would be provided to introduce air into the chamber 50 for that purpose.

An outboard brake shoe assembly 54, comprising a backing plate 56 and friction material formed to provide a friction pad 58, is mounted on the outboard caliper leg 30 so that the friction material may engage the disc friction-braking surface 16 in friction-braking relation when the brake is actuated. An inboard brake shoe assembly 60, comprising a backing plate 62 and friction material forming a friction pad 64, is mounted to be engaged by the piston head 44 for movement with the piston 42 so that the friction material 64 engages the disc friction-braking surface 18 when the brake is actuated and retracts with the piston when the brake is released. The brake shoe assembly 60 engages the piston head 44 so as to prevent rotation of the piston in the cylinder 36, in a manner well known in the art. A threaded shaft 66 is secured to the piston head 44 at one end 68 of the shaft 66 so that the shaft extends axially within the piston and is located in the portion of the pressure chamber 50 contained within the piston 42. The shaft 66 has external threads 70 formed thereon, and a sleeve nut 72 having a threaded inner surface 74 is threaded on to the shaft 66.

As is also shown in Figure 1, the sleeve nut outer surface 76 has at least a portion which defines a clutch inner surface. The outer surface 76 has an axially extending groove 78 therein. A coil spring clutch 80 is received about the sleeve nut outer surface 76 so that, in the normal relaxed condition of the clutch, the clutch does not grip the outer surface 76 of the sleeve nut. The clutch 80 has one end 82 extending inwardly and received in slidable relation in the sleeve nut groove 78. The other clutch end 84 extends outwardly.

A shaft and drive member assembly 86 includes a shaft 88 that is rotatably mounted in an axially extending opening 90 formed through the cylinder end wall 40. The outer end of the shaft 88 is configured to receive an arm 92 thereon retained by a suitable device such as a retainer nut 94. The arm 92 is non-rotatably mounted on the shaft 88. A seal 96 in a shaft groove 98 seals the opening 90 against brake fluid leakage. The inner end 100 of the shaft 88 extends into the pressure chamber 50 and has a drive member 102 secured thereto. The drive member 102 is illustrated as being generally cup-shaped with a skirt section 104 extending over the spring clutch end 84. An internal groove 106 formed in the skirt section 104 receives the spring clutch end 84 therein in sliding relation. Rotation of the drive member 102 in either arcuate direction will move the spring clutch end 84 with it. Bearing elements in the form of washers 108 and 110 are mounted on the shaft 88 to provide bearing surfaces for the drive member 102 and arm 92.

During service braking actuation, the master cylinder 20 is actuated, and brake fluid under pressure is delivered to the chamber 50. The pressure fluid acts against the piston 42 to move the piston and brake shoe assembly 60 towards the disc 14 until the friction material 64 engages the friction-braking surface 18 of the disc. The pressurization of the chamber 50 also causes the caliper housing 28 to move in the opposite direction to cause the friction material 58 of the outboard brake shoe assembly 54 to engage the other friction-braking surface 16 of the disc. Further pressurization generates braking action in well-known manner.

Actuating movement of the piston 42 carries the threaded shaft 66 and sleeve nut 72 with the piston, the end 82 of the spring clutch co-operating with the groove 78 to permit sliding movement of the sleeve nut 72 relative to the clutch. Upon brake release, the pressure in the chamber 50 is released and the piston retracts, actuated by the seal 46 in well-known manner. If the friction pads 58 and 64 have become sufficiently worn, the piston, as well as the threaded shaft 66 and sleeve nut 72, will return to an adjusted position.

When it is desired to mechanically actuate the brake assembly, the arm 92 is rotated by suitable means such as a parking brake cable 112, thereby rotating the shaft 88 and drive member 102 in an arcuate direction. The drive member 102 carries the end 84 of the spring clutch with it, so exerting torsional stress on the spring clutch tending to wind it up, and thereby causing it to decrease its inner diameter until the spring coils engage the outer surface 76 of the sleeve nut 72 in gripping relation. Further rotation of the drive member 102 transmits brake-actuating forces through the spring clutch to drive the sleeve nut 72 arcuately. This causes the threaded shaft 66 to be moved axially in the sleeve nut 72 towards the disc 14, thus driving the piston 42 in the brake-actuating direction. The brake shoe assemblies are thereby forced into engagement with the disc 14 in the same manner as before, so actuating the brake assembly.

When the parking brake is released, brake apply tension on the cable 112 is released, and the arm 92 as well as the assembly 86 returns arcuately to the released position. This causes the spring clutch 80 to be released from the sleeve nut 72, and permits retracting movement of piston 42 together with the shaft 66 and nut 72 in the same manner as earlier described.

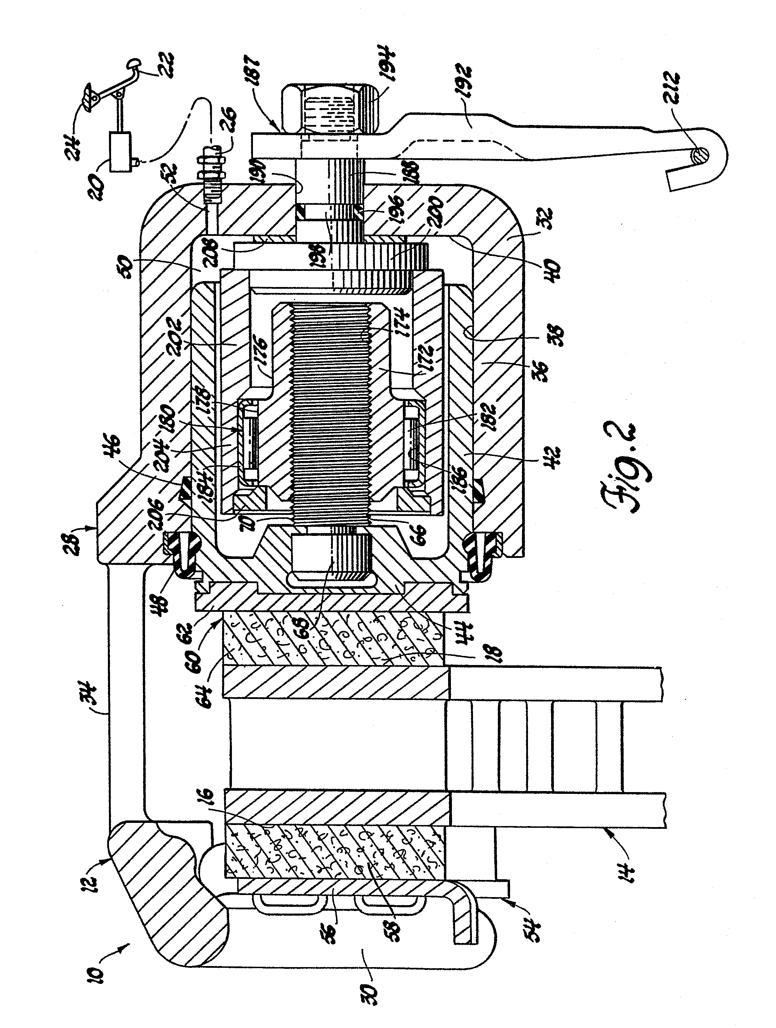

The embodiment shown in Figure 2 uses a sprag roller clutch instead of a coil spring clutch. For the purpose of describing the Figure 2 embodiment, the same reference numerals as in Figure 1 will be used where appropriate. A sleeve nut 172 has a threaded inner surface 174 and is threaded on to a shaft 66. The sleeve nut outer surface 176 has a portion which defines a clutch inner race 178. A sprag clutch 180 is received about the clutch inner race 178 so that, in the normal relaxed condition of the clutch, the clutch does not grip the sleeve nut. The clutch 180 has rollers (sprags) 182 mounted in a cage 184 forming the clutch outer race 186. The sprags 182 are received in axially slidable relation on the sleeve nut race 178.

A shaft and drive member assembly 187 includes a shaft 188 rotatably mounted in an axially extending opening 190 formed through a cylinder end wall 40. The outer end of the shaft 188 is configured to receive an arm 192 thereon, retained by a suitable device such as a retainer nut 194. The arm 192 is non-rotatably mounted on the shaft 188. A seal 196 in a shaft groove 198 seals the opening 190 against brake fluid leakage. The inner end 200 of the shaft 188 extends into a pressure chamber 50 and has a drive member 202 secured thereto. The drive member 202 is illustrated as being generally cylindrical, with a section 204 having the clutch cage 184 securely fitted therein so as to be arcuately driven thereby. A retainer 206 is secured in the open end of the section 204 and limits axial movement of the clutch 180 and sleeve nut 172 relative to the drive member 202. Rotation of the drive member 202 in either arcuate direction will move the clutch cage 184 with it. A suitable bearing element such as a washer 208 is mounted on the shaft 188 to provide a bearing surface for the shaft end 200.

During service brake actuation, the master cylinder 20 is actuated, and brake fluid under pressure is thereby delivered to the chamber 50. The pressure fluid acts against the piston 42 to move the piston and brake shoe assembly 60 towards the disc 14 until the friction material 64 engages the friction braking surface 18 of the disc. The pressurization of the chamber 50 also causes the caliper housing 28 to move in the opposite direction, to engage the friction pad 58 of the outboard brake shoe assembly 54 with the other friction braking surface 16 of the disc. Further pressurization generates braking action in well-known manner. Actuating movement of the piston 42 carries the threaded shaft 66 and sleeve nut 172 with the piston, the clutch sprags 182 permitting sliding movement of the sleeve nut 172 relative to the clutch. Upon brake release, the pressure in the chamber 50 is released and the piston retracts, actuated by a seal 46 in well-known manner. If the friction pads 58 and 64 have become sufficiently worn, the piston 42, as well as the threaded shaft 66 and sleeve nut 172, will return to an adjusted position.

When it is desired to mechanically actuate the brake assembly, the arm 192 is rotated by suitable means such as parking brake cable 212, thereby rotating the shaft 188 and drive member 202

0127314

in an arcuate' direction. The drive member 202 carries the clutch cage 184 with it,locking the sprags on the outer race 186 formed by the cage 184 and on the inner race 178 of the sleeve nut 172. Further rotation of the drive member 202 transmits torsional brake-actuating forces through the clutch 180 to drive the sleeve nut 172 arcuately. This causes the threaded shaft 66 to be moved axially in the sleeve nut 172 towards the disc 14, thus driving the piston 42 in the brake-actuating direction. The brake shoe assemblies are forced into engagement with the disc 14 in the same manner as before, thereby actuating the brake assembly.

When the parking brake is released, brake apply tension on the cable 212 is released, and the arm 192 as well as the assembly 187 returns arcuately to the released position. This causes the clutch 180 to be released from the sleeve nut 172 and permits retracting movement of the piston 42 together with the shaft 66 and nut 172 in the same manner as earlier described.

Claims:                                    0127314

1. , A vehicle disc brake assembly in which friction pads (58 and 64) of a disc brake caliper (12) are adapted to be applied to opposite sides of a rotary brake disc (14) to effect brake application, a piston (42) is reciprocably disposed in a cylinder (36) contained by the brake caliper (12) and is actuable by fluid pressure to effect apply movement of the friction pads (58 and 64), and means (86 etc) adapted to act by way of the piston (42) for mechanical actuation of the friction pads (58 and 64) includes a cylindrical sleeve nut (72) threaded on to a threaded shaft (64); characterised in that the threaded shaft (64) is connected to the piston (42); a one-way clutch (80) includes a first part defining a clutch inner surface (76) on at least a portion of the outer cylindrical surface of the sleeve nut (72), a second part (80) providing selectively actuated clutch locking means received circumferentially about the first part in a normally non-locking relation therewith so as to permit axial movement of the sleeve nut (72) relative to the second part (80), and a third part (102,104) operatively connected to the second part (80), the third part (102, 104) being movable in one arcuate direction relative to the first part (76) to lock the second part (80) in locking relation to the first part (76) and being movable in the opposite arcuate direction to unlock the second part (80) from the first part (76); the clutch (80), while the third part (102, 104) is actuated to lock the second part (80) to the first part (76), defines a torsional force flow path to the sleeve nut (72) from the third part (102, 104); drive means (86) is mounted on the caliper (12) and extends into the cylinder (36) and engages the third part (102, 104) in arcuate driving relation, the said drive means (86) being actuable to move the third part (102,104) in the said one arcuate direction to exert torsional force thereon initially to cause the second part (80) to lock with the first part (76) and then move the sleeve nut (72) arcuately to cause the sleeve nut to drive the threaded shaft (64) and the piston (42) to apply the brake, and to move the third part (102, 104) in the said opposite arcuate direction to release the brake; the piston (42) is actuable by pressure in the cylinder (36) to move the piston (42) to apply the brake, and in so moving the piston also moves the threaded shaft (64) and the sleeve nut (72) axially relative to the second part (80); and means (78, 82) establishes and retains the piston (42) and the shaft (64) and the sleeve nut (72) in an adjusted-brake position in the cylinder (36) after pressure release.

2. A vehicle disc brake assembly according to claim 1, characterised in that the cylindrical sleeve nut (72) has an external groove (78) extending in an axial direction; the one-way clutch (80) includes a clutch member defined by a coil spring (80) received about the cylindrical sleeve nut (72) in a normally non-gripping relation therewith, with one end of the coil spring (80) extending into the external groove (78) in the sleeve nut in slidable relation therewith, an opposite end of the coil spring (80) being movable arcuately relative to the sleeve nut (72) to cause the coil spring (80) to selectively grip and release the sleeve nut (72); and the drive means (86) that is mounted on the caliper (12) and extends into said cylinder (36) engages the said other end of the coil spring (80) and is actuable to move the said coil spring other end arcuately in one direction to torsionally stress the coil spring (80) and thereby cause the coil spring (80) to grip the sleeve nut (72) and move the sleeve nut (72) arcuately to cause the said sleeve (72) nut to drive the threaded shaft (66) and the piston (42) to apply the brake, and to move the said other end of the coil spring (80) arcuately in the other direction to release the brake.

3. A vehicle disc brake assembly according to claim 1, characterised in that first and second brake shoe assemblies (54 and 60) are located respectively on opposite sides of the rotary brake disc (14), the first brake shoe assembly (54) engaging a caliper housing (28) of the disc brake caliper (12); the piston (42) is cup-shaped and is sealingly and axially slidable in the caliper housing (28) with the closed end of the piston (42) engaging the second brake shoe assembly (60); means (60) is provided preventing rotation of the piston (42) in the caliper housing (28); the threaded shaft (66) is secured to the closed end of the piston (42) and extends axially within the piston towards the open end of the piston; the sleeve nut (72) that is threaded on the shaft (66) is relatively movable thereon with concurrent axial and rotational movements; the one-way clutch (80) comprises a coil spring clutch wound about the sleeve nut (72) and having one end slidably but non-rotatably attached thereto, the coils of the spring clutch (80) being immediately adjacent to the outer surface (76) of the sleeve nut (72) and normally in non-gripping relation thereto; and the drive means (86) includes shaft means (88) rotatably and sealingly mounted in the caliper housing (28) and having one end extending exteriorly of the housing (28) and adapted to be arcuately moved in the said housing, the shaft means (88) having another end extending into the open end of the piston (42) and secured to the other end of the spring clutch (80) for moving the said other end

of the spring clutch arcuately to selectively tighten the spring clutch (80)into gripping relation with the sleeve nut (72) and release the gripping action of the spring clutch relative to said sleeve nut (72), the coils of the spring clutch (80) gripping the sleeve nut (72) upon slight arcuate movement of the said shaft means (88) in the brake-apply direction to rotate the sleeve nut (72) upon further arcuate movement of said shaft means (88) and axially drive the threaded shaft (66) and the piston (42) and the second brake shoe assembly (60) towards the rotary disc (14) to engage the second brake shoe assembly (60) in friction-braking relation with the rotary disc (14), the said one end of the spring clutch (80), while the coils of the spring clutch are in non-gripping relation with the sleeve nut (72), permitting slidable movement of the sleeve nut (72) relative to the spring clutch (80) upon brake release to permit axial adjustment of the threaded shaft (66) and the piston (42) relative to the sleeve nut (72) and thereby adjust the brake-released position of the piston (42) and the brake shoe assemblies (58 and 60) for brake lining wear.

4. A vehicle disc brake assembly according to claim 1, characterised in that the cylindrical sleeve nut (172) threaded on the shaft (66) has a clutch inner race (178) thereon defining part of a one-way clutch (180), the one-way clutch (180) further including a clutch outer race (186) and sprags (182) between the races (178 and 186), at least one of the races (178 and 186)being capable of limited axially slidable movement relative to the sprags (182) only while the clutch (180) is released,and arcuate movement of the outer race (186) relative to the inner race (178) acting in one arcuate direction to lock the races (178, 186) and the sprags (182) together against relative rotary movement and acting in the other arcuate direction to release the races (178, 186) and the sprags (182); and the drive means (187) that is mounted on the caliper (28) and extends into the cylinder (36) is secured to the outer race (186) and is actuable to move the outer race (186) arcuately in one arcuate direction to cause the clutch (180) to be locked and then move the sleeve nut (172) arcuately to cause the sleeve nut (172) to drive the threaded shaft (66) and the piston (42) to apply the brake, and to move the outer race (186) arcuately in the other arcuate direction to release the clutch (180) and the brake, the piston (42) being actuable by pressure in the cylinder (36) to move the piston (42) to apply the brake, and in so moving the piston (42) also moving the threaded shaft (66) and the sleeve nut (172) axially relative to the outer race (186) and retaining the piston (42) and the threaded shaft (66) and the sleeve nut (172) in an adjusted-brake position in the cylinder (36) after pressure release.

5.   A vehicle disc brake assembly according to claim 1, characterised in that first and second brake shoe assemblies (54 and 60) are located respectively on opposite sides of the rotary brake disc (14), the first brake shoe assembly (54) engaging a caliper housing (28) of the disc brake caliper (12); the piston (42) is cup-shaped and is sealingly and axially slidable in the caliper housing (28) with the closed end of the piston (42) engaging the second brake shoe assembly (60), means (60) is provided preventing rotation of the piston (42) in the caliper housing (28); the threaded shaft (66) is secured to the closed end of the piston (42) and extends axially within the piston towards the open end of the piston; the sleeve nut (172) that is

0127314

threaded on the shaft (66) is relatively movable thereon with concurrent axial and rotational movements; the one-way clutch (180) is positioned about the sleeve nut (172) and has an inner race (178) on the sleeve nut (172), an outer race (186), and sprags (182) between the said races (178 and 186) to selectively lock the races together and release the races; the drive means (187) includes shaft means (188) rotatably and sealingly mounted in the caliper · housing (28) and having one end extending exteriorly of the housing and adapted to be arcuately moved in the said housing (28), the shaft means (188) having another end extending into the open end of the piston (42) and operatively secured to the outer race (186) for moving the outer race (186) arcuately to selectively lock the races (178 and 186) together and to release the races; the clutch (180) being locked by arcuate movement of the shaft means (188) in the brake-apply direction and being adapted to rotate the sleeve nut (172) upon further arcuate movement of the shaft means (188) and axially drive the threaded shaft (66) and the piston(42) and the second brake shoe assembly (60) towards the rotary disc (14) to engage the second brake shoe assembly (60) in friction-braking relation with the rotary disc (14); the clutch (180), while released, permitting slidable movement of the sleeve nut (172) relative to the outer race (186) upon brake release to permit axial adjustment of the threaded shaft (66) and the piston (42) relative to the sleeve nut (172) and thereby adjust the brake-released position of the piston (42) and the brake shoe assemblies (54, 60) for brake lining wear.

Fig.1

Fig.2